(19) Europäisches Patentamt
European Patent Office
Office européen des brevets

(11) **EP 3 903 282 B1**

(12) **FASCICULE DE BREVET EUROPEEN**

(45) Date de publication et mention de la délivrance du brevet:
**07.06.2023 Bulletin 2023/23**

(21) Numéro de dépôt: **19828279.0**

(22) Date de dépôt: **23.12.2019**

(51) Classification Internationale des Brevets (IPC):
**G06T 7/187** [(2017.01)]

(52) Classification Coopérative des Brevets (CPC):
**G06T 7/187;** G06T 2207/20152; G06T 2207/30181

(86) Numéro de dépôt international:
**PCT/EP2019/086962**

(87) Numéro de publication internationale:
**WO 2020/136180 (02.07.2020 Gazette 2020/27)**

(54) **MÉTHODE DE SEGMENTATION D'UNE IMAGE**

VERFAHREN ZUM SEGMENTIEREN EINES BILDES

METHOD FOR SEGMENTING AN IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2018 BE 201805955**

(43) Date de publication de la demande:
**03.11.2021 Bulletin 2021/44**

(73) Titulaire: **Mintt**
**1050 Bruxelles (BE)**

(72) Inventeur: **BAELE, Xavier**
**1200 Bruxelles (BE)**

(74) Mandataire: **Gevers Patents**
**Intellectual Property House**
**Holidaystraat 5**
**1831 Diegem (BE)**

(56) Documents cités:
• **BARD ROMSTAD ET AL: "Mean-curvature watersheds: A simple method for segmentation of a digital elevation model into terrain units", GEOMORPHOLOGY, ELSEVIER, AMSTERDAM, NL, vol. 139, 29 octobre 2011 (2011-10-29), pages 293-302, XP028446320, ISSN: 0169-555X, DOI: 10.1016/J.GEOMORPH.2011.10.031 [extrait le 2011-11-04]**

• **Y. WEISS: "Segmentation using eigenvectors: a unifying view", COMPUTER VISION, 1999. THE PROCEEDINGS OF THE SEVENTH IEEE INTERNATION AL CONFERENCE ON KERKYRA, GREECE 20-27 SEPT. 1999, 1 janvier 1999 (1999-01-01), page 975, XP055561242, US DOI: 10.1109/ICCV.1999.790354 ISBN: 978-0-7695-0164-2**

• **MEYER ET AL: "Topographic distance and watershed lines", SIGNAL PROCESSING, ELSEVIER SCIENCE PUBLISHERS B.V. AMSTERDAM, NL, vol. 38, no. 1, 1 juillet 1994 (1994-07-01), pages 113-125, XP026658655, ISSN: 0165-1684, DOI: 10.1016/0165-1684(94)90060-4 [extrait le 1994-07-01]**

• **HIEU TAT NGUYEN ET AL: "Watersnakes: Energy-driven watershed srgmentation", IEEE TRANSACTIONS ON PATTERN ANALYSIS AND MACHINE INTELLIGENCE, IEEE COMPUTER SOCIETY, USA, vol. 25, no. 3, 1 mars 2003 (2003-03-01), pages 330-342, XP011095644, ISSN: 0162-8828, DOI: 10.1109/TPAMI.2003.1182096**

• **ARIEL SHAMIR: "A survey on Mesh Segmentation Techniques", COMPUTER GRAPHICS FORUM, vol. 27, no. 6, 4 janvier 2008 (2008-01-04), pages 1539-1556, XP055332257, DOI: 10.1111/j.1467-8659.2007.01103.x**

• **KAVETI S ET AL: "Second-order implicit polynomials for segmentation of range images", PATTERN RECOGNITION, ELSEVIER, GB, vol. 29, no. 6, 1 juin 1996 (1996-06-01), pages 937-949, XP004007079, ISSN: 0031-3203, DOI: 10.1016/0031-3203(95)00137-9**

## Description

## Domaine technique

La présente invention concerne une méthode de segmentation d'une image.

## Art antérieur

Une image est typiquement constituée d'un nombre important de pixels. Lors de certaines opérations de traitement et/ou d'extraction d'informations d'une image, il peut être utile de partitionner l'image en un ou plusieurs groupes de pixels avec lesquels il est plus aisé de travailler. Pour ce faire, des techniques de segmentation d'image sont utilisées.

Ces techniques permettent généralement de séparer une zone d'un objet d'une image d'une zone d'arrière-plan, et ce dans un objectif subséquent comprenant, par exemple, une détection, une extraction, une description, un suivi ou une reconnaissance de cet objet.

Il existe de nombreuses techniques de segmentation d'image plus ou moins adaptées à l'objectif subséquent poursuivi, de même qu'au type d'image. Ces techniques ont néanmoins des défauts d'efficacité. Un défaut récurrent est la sursegmentation d'image limitant l'efficacité de la segmentation et générant une perte de temps dans un traitement ultérieur de l'image sursegmentée.

## Résumé de l'invention

Un objet de la présente invention est de fournir une méthode de segmentation d'image plus efficace que des techniques de segmentation d'image connues.

À cet effet, l'invention propose une méthode de segmentation d'une image, mise en oeuvre par ordinateur et comprenant les étapes suivantes :

(0) sélectionner des pixels de l'image ;
(i) évaluer une courbure en chacun des pixels, un domaine de valeurs de la courbure étant discrétisé en un nombre fini de valeurs, et ladite courbure étant évaluée dans ledit domaine discrétisé ;
(ii) définir un relief topographique sur base de l'image, une altitude dudit chacun des pixels correspondant à la courbure évaluée à l'étape (i) ;
(iii) calculer une ligne de partage des eaux du relief topographique défini à l'étape (ii) pour en délimiter des bassins versants ;
(iv) définir une partition des pixels sur base de la ligne de partage des eaux calculées à l'étape (iii) ;
(v) définir une segmentation de l'image en un ou plusieurs groupes de pixels sur base de la partition définie à l'étape (iv).

La méthode selon l'invention permet de segmenter une image de façon particulièrement efficace.

En effet, cette méthode permet d'obtenir une segmentation de l'image qui est géométriquement naturelle, dans le sens où il est tenu compte de la géométrie d'un objet et/ou d'une scène qui est représentée sur cette image. Ceci est dû au fait que la courbure évaluée à l'étape (i) encode au moins partiellement cette géométrie, par exemple, dans une donnée bidimensionnelle spatiale de chaque pixel et/ou un niveau de gris de chaque pixel, et/ou une mesure de profondeur de chaque pixel pour une image 3D. Le relief topographique qui est défini à l'étape (ii) fait ressortir sous la forme d'un relief les pixels ayant une courbure plus importante. La ligne de partage des eaux calculée à l'étape (iii) peut l'être selon l'une quelconque des techniques connues d'un homme du métier, par exemple, préférentiellement, une méthode de segmentation par ligne de partage des eaux. Cette ligne de partage des eaux permet de mettre à jour des bords de zones d'objets et/ou d'objets de la scène car ceux-ci sont de courbures différentes et plus élevées que, par exemple, un mur d'arrière plan d'une courbure nulle. Les bords apparaissent ainsi de façon parfaitement naturelle selon la continuité de la courbure, et la ligne de partage des eaux marque précisément les lieux de courbures maximales (et donc les discontinuités). Enfin, cette ligne de partage des eaux permet, à l'étape (iv), de partitionner les pixels en différents groupes étant séparés par la ligne de partage des eaux, ces groupes correspondant à des zones d'objets de la scène.

La grande efficacité de la méthode selon l'invention repose sur le fait qu'elle tient avantageusement compte de la courbure des pixels et qu'elle ne repose pas sur des regroupements de pixels (potentiellement arbitrairement) proches, de tels regroupements étant généralement sources d'une sursegmentation, c'est-à-dire une segmentation en un trop gros nombre de groupes de pixels, ou d'une segmentation défaillante comprenant, par exemple, un groupe de pixels non connectés entre eux au sein du groupe.

Les termes « un domaine de valeurs de la courbure étant discrétisé en un nombre fini de valeurs, et ladite courbure étant évaluée dans ledit domaine discrétisé » dans ladite étape (i) sont complètement équivalents à considérer (de façon plus concise, et selon la terminologie usuelle de l'homme du métier) que « la courbure est discrétisée en un nombre fini de valeurs ». En particulier, l'étape (i) permet d'obtenir une méthode de segmentation géométriquement naturelle et particulièrement efficace car il est prévu de tenir compte de la courbure évaluée sous une forme discrétisée. En effet, une telle forme discrétisée permet de réduire fortement le spectre de valeurs possibles pour la courbure, de telle sorte que deux pixels voisins qui seraient de courbures réelles quasiment identiques auront une courbure évaluée sous forme discrétisée identique. Ceci permet avantageusement d'éviter de définir un relief topographique à l'étape (ii) qui traduirait des imprécisions et/ou un bruit de l'image sous la forme d'un grand nombre de petites variations topographiques, celles-ci étant susceptibles d'engendrer une sursegmentation. De cette façon, la segmentation qui sera obtenue à l'étape (v) sera d'une meilleure qualité et la méthode sera globalement plus performante. De préférence, le nombre fini de valeurs en lequel la courbure est discrétisée est compris entre 100 et 1600 valeurs, plus préférentiellement entre 150 et 1200 valeurs, plus préférentiellement encore, entre 200 et 800 valeurs. Il est de préférence fortement plus petit que le nombre de pixels sélectionnés.

De préférence, l'image est une image 3D. Avantageusement, l'image 3D est une image capturée par une caméra 3D (ou système d'imagerie 3D), de sorte que chaque pixel comprend une donnée de profondeur, ce qui permet une définition géométriquement naturelle de la courbure. En particulier, dans ce cas, l'image 3D n'est préférentiellement pas constituées de voxels (d'une dimension 3), mais bien de pixels (d'une dimension 2,5).

La méthode selon l'invention est particulièrement utile pour analyser une scène capturée par une caméra 3D. L'analyse de la scène est alors de façon préférée utilisée dans des objectifs variés, par exemple, dans un cadre médical ou, par exemple, pour détecter une chute d'une personne qui serait filmée de façon ponctuelle ou continue par une caméra 3D.

La méthode selon la présente invention est adaptée à tout type d'image 3D. De préférence, l'image 3D est une image générée à partir d'une caméra temps de vol. Une telle caméra 3D est connue d'un homme du métier. Dans une telle caméra 3D, la perception de la profondeur est obtenue à partir de la forme d'un front d'onde de lumière réfléchi par des objets à portée de la caméra 3D. Avantageusement, les caméras temps de vol permettent une acquisition d'une pluralité d'image 3D en un temps très réduit, sans nécessité un balayage complet d'un objet et/ou d'une scène.

Plus précisément, dans ce cas, la méthode selon l'invention consiste alors en une méthode de segmentation d'une images 3D générée par une caméra temps de vol.

Néanmoins, la méthode selon la présente invention n'est aucunement limitée aux images 3D générée à partir d'une caméra temps de vol. Des images capturées par des systèmes d'imagerie tels qu'une caméra à lumière structurée, une caméra stéréo, un LIDAR, un radar, ou un sonar, ne se départiraient pas du cadre de l'invention. De façon plus générale, la méthode selon l'invention peut être utilisé pour segmenter des images de toute autre nature connue d'un homme du métier.

Dans le cadre du présent document, la notion de « pixel » est supposée connue d'un homme du métier. De façon simplifiée, un pixel consiste en un élément d'image. Un pixel d'une image 3D comprend une mesure de profondeur, de sorte qu'il peut être représenté dans un espace tridimensionnel et interprété comme mesure bruitée (ou variable aléatoire) à valeurs dans cet espace tridimensionnel, associant ainsi l'image à un nuage de points.

Dans le cadre de ce document, la « courbure » fait référence à une mesure quantitative d'un caractère plus ou moins courbé. Il est connu d'évaluer une courbure, par exemple, la courbure de Gauss, en un point d'une variété riemannienne. Dans le cadre de la présente invention, cette notion de courbure évaluée en un pixel correspond préférentiellement à une courbure, en un point d'une variété interpolant au moins localement un nuage de points associés aux pixels. Il existe plusieurs méthodes de calcul d'une telle courbure fournissant des courbures associées à une parmi plusieurs définitions de courbure. La segmentation de l'image est susceptible de varier selon un choix d'une telle méthode de calcul de courbure. La présente invention en tant que telle n'est toutefois pas limitative de ce choix car elle repose principalement sur une définition du relief topographique à partir d'une évaluation (discrétisée) de courbure aux pixels de l'image. Quelle que soit la méthode de calcul de courbure et la discrétisation choisie, la courbure évaluée à l'étape (i) rend effectivement compte de la géométrie sous-jacente à l'image. En particulier, l'efficacité de la méthode selon l'invention du point de vue d'une obtention d'une segmentation de l'image géométriquement naturelle ne dépend pas d'une implémentation préférée de l'étape (i). Il est revendiqué et discuté plus loin une telle implémentation préférée pour laquelle l'évaluation de la courbure de l'étape (i) est basée sur une analyse en composantes principales, celle-ci étant préférentiellement appliquée (au moins localement) à une collection de pixels interprétés en tant que mesures bruitées (ou variables aléatoires).

Dans la cadre de ce document, il convient de comprendre le terme de « discrétisation » (et ses dérivés, par exemple « discrétiser ») comme étant une transformation d'une donnée continue (c'est-à-dire, pouvant prendre n'importe quelle valeur dans un espace continu de valeurs, typiquement, un intervalle réel) en une donnée discrète (c'est-à-dire, pouvant prendre n'importe quelle valeur dans un espace discret de valeurs), ou, de la même façon, une transformation d'un domaine continu, en un domaine discret (et, de préférence fini). Une telle discrétisation peut, par exemple, se faire en projetant chaque telle donnée continue sur la valeur discrète la plus proche (de préférence relativement à la distance euclidienne usuelle sur une droite réelle de valeurs), ou, en d'autres termes, en choisissant la valeur discrète qui approxime le mieux la donnée continue. En guise d'exemple très basique, si l'intervalle [0, 10] est discrétisé en 11 valeurs naturelles 0, 1, 2, 3, 4, 5, 6, 7, 8, 9 et 10, une donnée continue de cet intervalle pourrait être projeté sur cet ensemble discret par arrondi conventionnel. Par exemple, une évaluation de 5,23864 dans l'espace continue [0, 10] deviendrait 5 dans l'espace discret obtenu par cette discrétisation. Ainsi, deux valeurs évaluées dans l'espace continu comme étant proches de 5 deviennent exactement 5 dans l'espace discret. Ceci s'applique à l'étape (i) de sorte que la courbure est de préférence évaluée dans un espace continu de valeurs, puis évaluée sous forme discrétisée dans un espace discret de valeurs obtenu par discrétisation de l'espace continu.

Plus particulièrement, préférentiellement, l'étape (i) comprend :

- une première sous-étape d'évaluation de ladite courbure dans un intervalle borné réel consistant en ledit domaine ; et
- une deuxième sous-étape de discrétisation dudit intervalle en un nombre fini de valeurs.

Préférentiellement, elle comprend aussi une troisième sous-étape d'(ré-) évaluation de la courbure sous forme discrétisée, c'est-à-dire, dans ledit intervalle discrétisé.

En particulier, l'étape (i) comprend, d'une part, l'évaluation de la courbure en chacun des pixels comme un certain nombre réel appartenant à un intervalle borné réel (constituant un espace continu correspondant audit domaine), et d'autre part, la discrétisation de cet intervalle en un nombre fini de valeurs, de telle sorte que cette discrétisation s'applique à chaque telle valeur de courbure. L'intervalle correspond de préférence est un intervalle fermé borné correspondant à [0,r] où r > 0. L'homme du métier sait que

$$[0,r] := \{ x \in \mathbb{R} : 0 \leq x \leq r \}$$

Il est tout particulièrement avantageux de considérer la courbure comme prenant sa valeur dans un tel intervalle car un tel intervalle fermé borné réel peut facilement et efficacement être discrétisé en un nombre fini de valeurs (par exemple, en choisissant ce même nombre fini de points successivement équidistants sur l'intervalle). Ce n'est pas le cas pour une courbure régulière classique de géométrie riemannienne qui prend ses valeurs dans un continuum de points de la droite réelle. En effet, il n'est pas évident de choisir un nombre fini de valeurs qui rendent compte d'un tel espace continu non borné dans une évaluation de la courbure riemannienne. Préférentiellement, l'intervalle est [0,1/3]. La valeur r = 1/3 n'a pas beaucoup d'importance car elle peut être changée en multipliant la courbure par un facteur. Il est donné dans la suite une implémentation préférée de l'étape (i) parfaitement adaptée au contexte de l'invention et permettant d'évaluer la courbure dans [0,1/3]. Notons que cet intervalle peut avantageusement être facilement discrétisé en n valeurs (pour n > 1 un nombre naturel quelconque préférentiellement compris entre 100 et 1600, plus préférentiellement entre 150 et 1200, plus préférentiellement encore, entre 200 et 800). Par exemple, il suffit de considérer l'espace discret consistant en les valeurs $(m/3)(n-1)^{-1}$ où m varie dans les nombres naturels entre 0 et n-1.

Dans le cadre de ce document, de préférence, le terme « relief topographique » fait référence à une mesure de variation d'altitude d'une surface. Le sens de ce terme correspond préférentiellement à celui qu'il a dans le domaine de la géomorphologie. Le relief topographique défini à l'étape (ii) correspond à une association d'une altitude en des pixels de l'image.

Dans le cadre de ce document, la notion de « ligne de partage des eaux » a de préférence un sens équivalent à celui du domaine de la géomorphologie. Il s'agit donc d'une limite divisant le relief topographique en une ou plusieurs régions, appelées géographiquement les « bassins versants ». Pour de telles régions adjacentes séparées par la ligne de partage des eaux, une eau, par exemple, une eau de pluie, s'écoule selon des directions différentes, uniquement dans une de ces régions, selon qu'elle s'écoule d'un point de la première ou de la deuxième région. Cette notion de ligne de partage des eaux est définie classiquement sur un relief topographique continu. Dans le cadre de l'invention, vu que le relief topographique est défini sur base de pixels, celui-ci est principalement discret. Il existe plusieurs définitions d'une notion de ligne de partage des eaux dans ce contexte. L'invention en tant que telle n'est aucunement limitée par un choix de méthode de calcul de ligne de partage des eaux. En effet, l'invention repose au moins sur la caractéristique d'effectuer ce calcul de ligne de partage des eaux sur base d'un relief topographique obtenu à partir de la courbure en des pixels de l'image et non sur ce choix de méthode de calcul spécifique. En particulier, le caractère avantageux de la méthode selon l'invention du point de vue de l'obtention d'une segmentation de l'image géométriquement naturelle ne dépend pas d'une implémentation préférée de l'étape (iii). En outre, comme il est discuté plus loin dans ce résumé de l'invention, il existe plusieurs méthodes de calcul de la ligne de séparation des eaux, les étapes (ii) à (v) étant implémentées de façon préférée via une méthode connue de segmentation par ligne de partage des eaux.

Dans le cadre du présent document, le terme « partition » d'un ensemble consiste en une division de l'ensemble en sous-ensemble, de sorte que chaque élément de l'ensemble appartienne à un et seul sous-ensemble. Typiquement, une segmentation d'une image est une partition de pixels constituant l'image en un ou plusieurs groupes de pixels, et ce de façon à faciliter un traitement et/ou une analyse ultérieurs de l'image sur base de ces groupes et non plus de chaque pixel. Afin de faciliter ce traitement et/ou cette analyse, il est important que la segmentation de l'image se fasse efficacement.

La méthode selon la présente invention permet de définir de façon avantageuse une segmentation efficace d'image à l'étape (v) sur base de la partition définie à l'étape (iv) sur les pixels sélectionnés pour l'étape (0), de sorte que chaque groupe de pixels de la segmentation comprend un et un seul sous-ensemble de cette partition. Le ou les groupes de pixels de la segmentation sont exclusivement séparés par la ligne de partage des eaux calculée à l'étape (iii).

De façon préférée, l'image est constituée d'un ensemble de pixels et les pixels qui sont sélectionnés à l'étape (0) consiste en tous les pixels de cet ensemble. Ceci permet d'obtenir un relief topographique plus précis sur base de tous les pixels de l'image, et donc de calculer plus précisément sa ligne de partage des eaux, et donc de définir une segmentation plus précise de l'image. L'invention n'est pas limitée à ce mode de réalisation et l'ensemble des pixels sélectionnés à l'étape (0) est susceptible de ne pas comprendre tous les pixels de l'ensemble de pixels qui constituent l'image. En particulier, les pixels sélectionnés à l'étape (0) comprennent de préférence au moins 50%, plus préférentiellement, au moins 90%, des pixels de l'image. Avantageusement, dans ce cas, les étapes (i) à (iii) de la méthode sont exécutées plus rapidement que lorsque tous les pixels de l'image sont sélectionnés dès l'étape (0).

Il est maintenant introduit une implémentation préférée de l'étape (i) pour l'évaluation d'une courbure en chacun des pixels.

Selon un mode de réalisation préféré de l'invention, pour une image 3D, l'étape (i) comprend les sous-étapes suivantes :

(i.1) définir une collection de pixels voisins pour chaque pixel en lequel la courbure est à évaluer ;
(i.2) calculer une matrice de covariance des pixels voisins ;
(i.3) calculer des valeurs propres de la matrice de covariance calculée à l'étape (i.2) ;
(i.4) évaluer la courbure sur base des valeurs propres calculées à l'étape (i.3).

Ces sous-étapes sont plus préférentiellement contenues dans la première sous-étape susmentionnée de l'étape (i).

Ce mode de réalisation préférée de l'étape (i) permet un calcul rapide et facile de la courbure en chacun des pixels. Il est pleinement tenu compte du fait que les pixels forment une structure discrète sur base de laquelle il convient d'utiliser des calculs locaux de courbure. Pour ce faire, la courbure en un pixel est évaluée au regard de plusieurs pixels voisins entourant le pixel en question, ceux-ci rendant compte de la géométrie locale au voisinage du pixel. Ces pixels voisins comprennent de façon préférée le pixel en lequel la courbure est à évaluer. Ils sont interprétés, tel qu'il est explicité précédemment dans ce texte, comme des mesures bruitées (ou variables aléatoires) à valeurs dans un espace tridimensionnel afin de calculer la matrice de covariance. Ainsi, pour des pixels voisins d'un pixel dont la courbure est à évaluer

étant notés $P_1, P_2, P_3, ..., P_N$, avec $N \in \mathbb{N} \setminus \{0\}$, si le pixel $P_j$, pour $1 \leq j \leq N$, est associé dans l'espace tridimensionnel au triplet

$$P_j = \left(P_{ij}\right)_{1 \leq i \leq 3} := \begin{pmatrix} P_{1j} \\ P_{2j} \\ P_{3j} \end{pmatrix},$$

et si le centre de gravité de ces pixels correspond au triplet

$$\left(\overline{P_{i*}}\right)_{1 \leq i \leq 3} := \begin{pmatrix} \overline{P_{1*}} \\ \overline{P_{2*}} \\ \overline{P_{3*}} \end{pmatrix},$$

alors, la matrice de covariance des pixels voisins correspond à

$$\frac{1}{N} \left[\left(P_{ij} - \overline{P_{i*}}\right)_{\substack{1 \leq i \leq 3 \\ 1 \leq j \leq N}}\right] \left[\left(P_{ij} - \overline{P_{i*}}\right)_{\substack{1 \leq i \leq 3 \\ 1 \leq j \leq N}}\right]^t.$$

Cette expression préférée de la matrice de covariance fait appel aux notations matricielles conventionnelles connues d'un homme du métier. En particulier, l'exposant *t* correspond à la transposée d'une matrice.

Cette matrice de covariance étant symétrique de genre (3,3), le problème de sa diagonalisation, de même que du calcul de ses valeurs propres et vecteurs propres peut être abordé. Dans le contexte préféré susdit, si $\lambda_1 \leq \lambda_2 \leq \lambda_3$ désignent les valeurs propres calculées à l'étape (i.3) ordonnées de façon croissante, la courbure (évaluée à la sous-étape (i.4)) coïncide de préférence avec une valeur

$$\frac{\lambda_1}{\lambda_1 + \lambda_2 + \lambda_3}.$$

Ce nombre est interprété comme une courbure d'une variété interpolant les pixels voisins. Ainsi, avantageusement, ce mode de réalisation préféré de l'étape (i) fournit une expression simple et explicite pour la courbure en un pixel. Celle-ci prend ses valeurs dans l'intervalle fermé borné réel [0,1/3]. Cet intervalle est alors de préférence discrétisé en un nombre fini de valeurs (par exemple, selon un des exemples donnés précédemment) (et préférentiellement lors de la deuxième sous-étape susmentionnée de l'étape (i)) et cette discrétisation est appliquée à la courbure évaluée (par exemple, selon un arrondi et/ou une projection sur une valeur discrète la plus proche de l'intervalle discrétisé, tel qu'exposé précédemment). Les valeurs rationnelles mentionnées pour la courbure pourraient néanmoins optionnellement être utilisées directement comme valeurs discrètes.

De façon précise, les étapes (i.2) et (i.3) sont de préférence implémentée par une analyse en composantes principales sur les pixels voisins. Une telle analyse permet, via les calculs explicites ci-dessus, de définir des axes de dispersion principaux des pixels voisins associés aux vecteurs propres de la matrice de covariance. Avantageusement, et de façon préférée, un vecteur normal à une variété d'interpolation des pixels voisins peut alors être obtenu à partir de ces vecteurs propres, de sorte qu'une orientation du pixel en lequel la courbure est évaluée peut être déterminée. En bref, l'étape (i.3) comprend préférentiellement également un calcul des vecteurs propres de la matrice de covariance calculée à l'étape (i.2), et l'étape (i) comprend la sous-étape suivante :

(i.5) déterminer une orientation du pixel en lequel la courbure est évaluée à l'étape (i.4) sur base des vecteurs propres calculés à l'étape (i.3).

Cette orientation est utile pour vérifier la segmentation obtenue par la méthode selon l'invention, en comparant une orientation d'un pixel à celle d'un ou plusieurs de ses pixels voisins. Il peut ainsi être mis en évidence une orientation globale des groupes de pixels de la partition de l'étape (iv), et des zones d'objets représentés par ces groupes de pixels. En outre, comme il est mentionné plus loin dans ce résumé, l'orientation peut aussi être utilisée lors d'un procédé de segmentation additionnel sur les groupes de pixels de la segmentation de l'étape (v). Pour ce faire, l'orientation, et/ou d'autres paramètres, associés à des pixels sur un bord d'un groupe de pixels de la segmentation de l'étape (v) sont comparés à l'orientation, et/ou d'autres paramètres, des pixels sur un bord adjacent d'un autre groupe de pixels de la segmentation de l'étape (v), de façon à déterminer si ces deux groupes de pixels pourraient éventuellement faire partie d'un même plan ou d'une même zone d'objet de l'image.

Préférentiellement, selon un quelconque parmi les modes de réalisation préférés susdits de l'étape (i), la collection de pixels voisins définie à l'étape (i.1) comprend au plus cent pixels dont le pixel en lequel la courbure est à évaluer. Ces au plus cent pixels sont préférentiellement répartis dans une forme géométrique parmi : un carré, un disque, un ovale, un rectangle, un losange, une croix. Une autre forme géométrique ne se départirait toutefois pas du cadre de l'invention. Plus préférentiellement encore, la collection de pixels voisins consiste en au plus quatre-vingt-un pixels essentiellement répartis dans un carré de côté de neuf pixels, centré au pixel en lequel la courbure est à évaluer. Le terme « pixels voisins » fait de préférence référence au plus proches pixels voisins. Ce terme ne peut cependant pas exclure un choix optionnel de deuxièmes et/ou troisièmes et/ou quatrièmes plus proches pixels voisins.

De façon préférée, la collection de pixels voisins comprend le pixel en lequel la courbure est à évaluer, et consiste en au plus vingt-cinq pixels essentiellement répartis dans un carré de côté de cinq pixels centré au pixel en lequel la courbure est à évaluer.

De façon plus préférée, cette collection consiste en neuf pixels essentiellement répartis selon un carré de côté de trois pixels centré au pixel en lequel la courbure est à évaluer. Cette configuration de neuf pixels voisins est avantageuse car elle permet d'évaluer une courbure qui tient compte d'une variation de pixels dans chaque direction, tout en minimisant le nombre de pixels voisins, ce qui revient avantageusement à minimiser la complexité du calcul de la courbure, et donc le temps nécessaire pour évaluer numériquement cette courbure. Il est maintenant discuté d'une implémentation préférée de l'étape (iii) pour le calcul de la ligne de partage des eaux.

Préférentiellement, la ligne de partage des eaux de l'étape (iii) est préférentiellement calculée sur base de techniques algorithmiques analogues à celles utilisées dans une méthode de segmentation par ligne de partage des eaux, également connue sous le nom « Watershed ». Une telle méthode est généralement connue d'un homme du métier. Sur base d'un relief topographique, il est ainsi proposé un calcul de la ligne de partage des eaux par simulation virtuelle d'une inondation du relief. Cette inondation peut être simulée, par exemple, par une montée d'eau à partir des points d'altitudes minimales locales du relief, ou par un ruissellement global d'eau, semblable à une pluie sur tout le relief. Ainsi, selon ces deux exécutions de l'étape (iii), l'étape (iii) comprend préférentiellement, les sous-étapes suivantes :

(iii.1) déterminer un sous-ensemble de pixels pour lesquels la courbure évaluée à l'étape (i) est localement minimale ;
(iii.2) simuler une inondation du relief topographique par une montée virtuelle d'eau à partir de chacun des pixels du sous-ensemble de pixels ;
(iii.3) calculer la ligne de partage des eaux sur base de la simulation de l'étape (iii.2).

ou les sous-étapes suivantes :

(iii.1') simuler une inondation du relief topographique par un ruissellement virtuel d'eau à partir de chacun des pixels ;
(iii.2') calculer la ligne de partage des eaux sur base de la simulation de l'étape (iii.1 ').

De façon avantageuse, des méthodes algorithmiques de calcul de la ligne de partage des eaux telles que susdites sont d'une complexité linéaire en le nombre de pixels sélectionnés à l'étape (0), ce qui permet une exécution très rapide et efficace.

En pratique, l'image sur laquelle la méthode selon l'invention est appliquée est susceptible de comprendre des imprécisions et/ou des bruits provenant de différentes sources. De cette façon, des surfaces qui sont représentées sur l'image subissent parfois de petites modifications susceptibles d'engendrer une sursegmentation. Malgré l'efficacité de la méthode selon l'invention, en particulier sur des images 3D, il convient de limiter autant que possible ces imprécisions et/ou bruits sur l'image. C'est pourquoi, la méthode comprend préférentiellement une ou plusieurs des caractéristiques techniques qui suivent :

- une étape de prétraitement de l'image préalablement à l'étape (0) et/ou à l'étape (i), l'étape de prétraitement comprenant de préférence un filtrage pour réduire un bruit de ladite image ; et/ou
- une étape de posttraitement sur des groupes de pixels de la segmentation définie à l'étape (v).

L'étape de posttraitement susdite peut comprendre une étape de l'un quelconque parmi les procédés de segmentation connus d'un homme du métier. Elle est alors utilisée en séquence après la méthode selon l'invention pour s'assurer que la segmentation définie à l'étape (v) est la plus efficace pour effectuer un traitement et/ou une analyse ultérieure de l'image. Ce posttraitement comprend de façon préférée une comparaison des groupes de pixels adjacents sur l'image à partir de la segmentation définie à l'étape (v). Cette comparaison vise à déterminer si deux tels groupes de pixels adjacents pourraient faire partie d'un même plan et/ou d'une même zone d'objet de l'image. Une fusion et/ou un regroupement des deux tels groupes est alors préférentiellement effectuée s'ils peuvent effectivement faire partie d'un même plan ou d'une même zone d'objet de l'image au vu de ladite comparaison. De cette façon, la méthode selon ce mode de réalisation particulier de l'invention permet de localiser des plans et/ou des surfaces continues de façon particulièrement efficace.

De préférence, et tel qu'il a été décrit précédemment dans ce résumé de l'invention, cette comparaison est effectuée sur base d'une orientation des pixels en bord de groupes de pixels, l'orientation ayant été calculée à l'étape (i), de préférence au moyen de techniques d'analyse en composantes principales sur les pixels.

La présente invention propose aussi un système informatique comprenant des moyens pour mettre en oeuvre la méthode selon l'un quelconque des modes de réalisation de la méthode selon l'invention. L'invention propose aussi un programme d'ordinateur comprenant des instructions qui, lorsque le programme d'ordinateur est exécuté, le conduisent à mettre en oeuvre la méthode selon l'un quelconque des modes de réalisation de l'invention. L'invention propose également un support lisible par un ordinateur sur lequel est enregistré le programme d'ordinateur susdit.

Le système informatique comprend de préférence au moins un hardware ou matériel informatique parmi :

- au moins un ordinateur comportant un processeur pour faire tourner des algorithmes quelconques, de préférence d'une architecture de type PC ou d'une architecture de type embarqué (ARM) ;
- un circuit intégré du type ASIC qui est spécifique à une application et/ou à un algorithme ;
- un circuit intégré logique du type FPGA qui est reconfigurable (ou reprogrammable) après fabrication.

Le support lisible par ordinateur un support ou un ensemble de supports quelconque parmi les supports qui sont capables de stocker des informations numériques. Il peut comprendre, par exemple, au moins l'un des éléments suivants : une mémoire numérique, un serveur, une clé USB, un ordinateur. Il peut être dans un nuage de données (cloud).

Tous les modes de réalisation et tous les avantages de la méthode selon l'invention se transposent mutatis mutandis au système informatique selon l'invention, au programme d'ordinateur selon l'invention et au support lisible par un ordinateur selon l'invention.

La présente invention a été décrite ci-dessus en relation avec des modes de réalisations spécifiques, qui ont une valeur illustrative et ne doivent pas être considérés comme limitatifs. D'une manière générale, il apparaîtra évident pour un homme du métier que la présente invention n'est pas limitée aux exemples illustrés et/ou décrits dans le résumé de l'invention. L'invention comprend chacune des caractéristiques nouvelles ainsi que toutes leurs combinaisons.

**Brève description de figures**

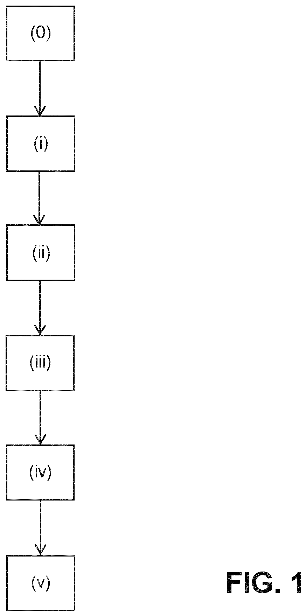

La compréhension du résumé de l'invention peut être complétée par la figure 1 annexée. Celle-ci représente un organigramme simplifié d'une méthode de segmentation d'image selon l'invention. Les étapes (0), (i), (ii), (iii), (iv) et (v) illustrées correspondent aux étapes (0), (i), (ii), (iii), (iv) et (v) revendiquées et décrites dans le résumé de l'invention. Ces étapes sont exécutées dans cet ordre.

**Description détaillée de modes de réalisation de l'invention**

De façon générale, dans le présent document, les dessins ou figures sont schématiques et ne sont pas limitants. La présence de numéros et/ou lettres de référence aux dessins n'est pas limitative, y compris lorsque ces numéros et/ou lettres sont indiqués dans les revendications. Les dessins des figures ne sont pas à l'échelle. En outre, des éléments semblables sont notés par des références semblables, et des éléments identiques ou analogues peuvent porter les mêmes références dans les figures.

Il est tout d'abord présenté un exemple simple de la méthode selon l'invention pour une image 3D, la plupart des pixels de l'image étant de préférence sélectionnés pour l'étape (0).

Il est supposé en guise d'exemple que l'image 3D est acquise de façon frontale à partir d'une scène consistant en une sphère, par exemple, un ballon, étant disposé devant un mur nu. Dans ce cas, à l'étape (i), la courbure en un pixel associé au mur sera essentiellement nulle, tandis que la courbure en un pixel associé à la sphère sera un nombre strictement positif clairement distinct de zéro. À l'étape (ii), le relief topographique qui est défini est essentiellement plat, sauf aux positions qui correspondent aux pixels associés à la sphère. À ces positions, une montée abrupte sera observée à proximité des bords de la sphère, cette montée étant circulaire et enfermant un creux correspondant aux pixels au milieu de la face de la sphère exposée frontalement sur la scène. La distinction entre les pixels du bord de la sphère sur l'image, et les pixels du milieu de la face exposée se fait compte tenu de la mesure de profondeur les pixels de l'image 3D, vu que l'image est une image 3D. À l'étape (iii), il est clair que la ligne de partage des eaux consiste approximativement en un cercle correspondant sur le relief topographique à la montée abrupte susdite. De cette façon, à l'étape (iv), les pixels sont partitionnés selon deux groupes : ceux de la sphère entourés par la ligne de partage des eaux, et ceux du mur. Il est ainsi possible de façon avantageuse de mettre en évidence la sphère devant le mur dans cet exemple basique.

Il est maintenant développé un exemple illustrant la grande efficacité de la méthode selon l'invention pour segmenter une image 3D générée à partir d'une caméra temps de vol.

Il est supposé en guise d'exemple que l'image 3D représente un angle sur un objet et/ou une scène réelle, par exemple, un angle de jonction entre deux murs d'une scène. Pour une telle image capturée par un caméra temps de vol, l'angle devient, sur l'image 3D acquise, une courbe reliant les deux murs, de sorte qu'il n'existe plus de discontinuité angulaire abrupte consécutive à la jonction entre ces murs. Dès lors, la notion de courbure en un pixel associé à la jonction entre les deux murs est bien définie et associée à un nombre fini. De plus, un autre avantage de la méthode selon l'invention dans ce contexte est que l'étape (iii) permet une implémentation de la segmentation de l'image 3D à partir des faces du mur, vu que celles-ci sont d'une courbure essentiellement nulle. La ligne de partage des eaux calculées ensuite algorithmiquement, de préférence par une inondation virtuelle du relief topographique selon une étape de méthode de segmentation par ligne de partage des eaux, va alors permettre de distinguer clairement chacun des deux murs, ainsi que leur jonction, car un voisinage de celle-ci présente une courbure plus grande mais toujours bien définie, tel qu'il est expliqué ci-dessus. Dans ce cadre, une méthode de segmentation qui grouperait des pixels proches, par exemple, sur base d'un rayon prédéfini, créerait une partition des pixels associées à ces deux murs en un grand nombre de groupes, de sorte que chacun des deux murs et leur jonction ne pourraient pas être clairement distingués à l'issue de la segmentation de l'image 3D. C'est la raison pour laquelle la méthode selon l'invention est efficace, précise et rapide, tout particulièrement sur des images acquises par une telle caméra temps de vol. Or, ces caméras sont très connues et actuellement fortement utilisées sur le marché. Il est donc d'autant plus avantageux que la méthode selon l'invention soit efficace dans ce contexte.

En résumé, la présente invention concerne une méthode de segmentation d'une image mise en oeuvre par ordinateur comprenant une segmentation par ligne de partage des eaux appliquée à une évaluation d'une courbure en des pixels de l'image.

De façon plus précise et/ou plus générale, la méthode selon l'invention peut être explicitée en tant qu'une méthode de segmentation d'une image comprenant des pixels, la méthode étant mise en oeuvre par ordinateur et comprenant les étapes suivantes :

(A) évaluer une courbure en chacun des pixels ;
(B) appliquer une méthode algorithmique de segmentation par ligne de partage des eaux à l'évaluation de la courbure de l'étape (A).

La méthode de segmentation selon l'invention revendiquée implique la discrétisation de la courbure évaluée à l'étape (i) (et/ou (A)). Toutefois, dans une version alternative de l'invention, il est proposé une méthode de segmentation d'une image (3D) selon la présente invention dans laquelle l'étape (i) est substituée à l'étape « (i) évaluer une courbure en chacun des pixels; cette étape comprenant les sous-étapes (i.1) à (i.4) » (ces dernières étant, quant à elles, décrites dans le résumé de l'invention). En effet, bien que la discrétisation de la courbure ne soit pas mentionnée dans cette version alternative, les nombreux avantages de la méthode de calcul de la courbure décrits dans le résumé de la présente invention suffisent à conférer un statut propre d'invention à cette version alternative. Dans ce cas, l'étape (i) (et/ou (A)) est alors implémentée via une analyse en composantes principales.

Il est à noter que, dans le présent document, l'usage du verbe « comprendre » de ses variantes, de ses synonymes, ainsi que de ses conjugaisons, ne peut en aucune façon exclure la présence d'éléments autres que ceux mentionnés. De la même façon, l'usage, dans le présent document, de l'article indéfini « un », « une », ou de l'article défini « le », « la » ou « l' », pour introduire un élément n'exclut en aucune façon la présence d'une pluralité de ces éléments.

Dans le cadre du présent document, par « ordinateur », il est préférablement entendu toute unité de calcul apte à réaliser la méthode selon l'invention. Un tel ordinateur peut comprendre, par exemple, un processeur, et/ou un réseau informatique, et/ou une unité programmable, et/ou un système de traitement de données, et/ou un serveur.

Un « support lisible par ordinateur » est préférentiellement un support ou ensemble de supports quelconques qui est apte à stocker des informations numériques. Un tel support peut comprendre, par exemple, une mémoire numérique, et/ou un serveur, et/ou une clé USB, et/ou un ordinateur.

## Revendications

1. Méthode de segmentation d'une image,
   la méthode étant mise en oeuvre par ordinateur et comprenant les étapes suivantes :

(0) sélectionner des pixels de ladite image ;
(i) évaluer une courbure en chacun desdits pixels,
un domaine de valeurs de la courbure étant discrétisé en un nombre fini de valeurs, et ladite courbure étant évaluée dans ledit domaine discrétisé ;
(ii) définir un relief topographique sur base de ladite image, une altitude dudit chacun desdits pixels correspondant à ladite courbure évaluée à l'étape (i) ;
(iii) calculer une ligne de partage des eaux dudit relief topographique défini à l'étape (ii) pour en délimiter des bassins versants ;
(iv) définir une partition desdits pixels sur base de ladite ligne de partage des eaux calculées à l'étape (iii) ;
(v) définir une segmentation de ladite image en un ou plusieurs groupes de pixels sur base de ladite partition définie à l'étape (iv).

2. Méthode de segmentation selon la revendication précédente, **caractérisée en ce que** l'étape (0) consiste à sélectionner tous les pixels de ladite image.

3. Méthode de segmentation selon l'une quelconque des revendications précédentes, **caractérisée en ce que** l'étape (i) comprend :

- une première sous-étape d'évaluation de ladite courbure dans un intervalle borné réel consistant en ledit domaine ; et
- une deuxième sous-étape de discrétisation dudit intervalle en un nombre fini de valeurs.

4. Méthode de segmentation selon la revendication précédente, **caractérisé en ce que** ledit intervalle correspond est un intervalle fermé borné correspondant à [0,r] où r > 0.

5. Méthode de segmentation selon l'une quelconque des revendications précédentes, **caractérisée en ce que** ladite image est une image 3D.

6. Méthode de segmentation selon la revendication précédente **caractérisée en ce que** ladite image 3D est générée à partir d'une caméra temps de vol.

7. Méthode selon l'une quelconque des deux revendications précédentes, **caractérisée en ce que** l'étape (i) comprend les sous-étapes suivantes :

(i.1) définir une collection de pixels voisins pour chaque pixel en lequel la courbure est à évaluer ;
(i.2) calculer une matrice de covariance desdits pixels voisins ;
(i.3) calculer des valeurs propres de la matrice de covariance calculée à l'étape (i.2) ;
(i.4) évaluer ladite courbure sur base des valeurs propres calculées à l'étape (i.3).

8. Méthode selon la revendication précédente, **caractérisée en ce que** ladite courbure coïncide avec une valeur

$$\frac{\lambda_1}{\lambda_1 + \lambda_2 + \lambda_3},$$

$\lambda_1 \le \lambda_2 \le \lambda_3$ désignant les valeurs propres calculées à l'étape (i.3) ordonnées de façon croissante.

9. Méthode selon l'une quelconque des deux revendications précédentes, **caractérisée en ce que** ladite collection de pixels voisins définie à l'étape (i.1) comprend le pixel en lequel la courbure est à évaluer, et consiste en au plus quatre-vingt-un pixels essentiellement répartis dans un carré de côté de neuf pixels, centré au pixel en lequel la courbure est à évaluer.

10. Méthode selon la revendication précédente, **caractérisée en ce que** ladite collection de pixels voisins définie à l'étape (i.1) consiste en neuf pixels essentiellement répartis selon un carré de côté de trois pixels, centré au pixel en lequel la courbure est à évaluer.

11. Méthode selon l'une quelconque des revendications 7 à 10, **caractérisée en ce que** l'étape (i.3) comprend également un calcul des vecteurs propres de la matrice de covariance calculée à l'étape (i.2), et **en ce que** l'étape (i) comprend la sous-étape suivante :
(i.5) déterminer une orientation du pixel en lequel la courbure est évaluée à l'étape (i.4) sur base des vecteurs propres calculés à l'étape (i.3).

12. Méthode selon l'une quelconque des revendications 1 à 11, **caractérisée en ce que** l'étape (iii) comprend les sous-étapes suivantes :

(iii.1) déterminer un sous-ensemble desdits pixels pour lesquels la courbure évaluée à l'étape (i) est localement minimale ;
(iii.2) simuler une inondation dudit relief topographique par une montée virtuelle d'eau à partir de chacun des pixels dudit sous-ensemble desdits pixels ;
(iii.3) calculer ladite ligne de partage des eaux sur base de la simulation de l'étape (iii.2).

13. Méthode selon l'une quelconque des revendications 1 à 11, **caractérisée en ce que** l'étape (iii) comprend les sous-étapes suivantes :

(iii.1') simuler une inondation dudit relief topographique par un ruissellement virtuel d'eau à partir de chaque pixel parmi lesdits pixels ;
(iii.2') calculer ladite ligne de partage des eaux sur base de la simulation de l'étape (iii.1').

14. Méthode selon l'une quelconque des revendications précédentes, **caractérisée en ce qu'**elle comprend une étape de prétraitement de ladite image préalablement à l'étape (0), l'étape de prétraitement comprenant un filtrage pour réduire un bruit de ladite image.

15. Méthode selon l'une quelconque des revendications précédentes, **caractérisée en ce qu'**elle comprend en outre une étape de posttraitement sur des groupes de pixels de la segmentation définie à l'étape (v).

16. Système informatique comprenant des moyens pour mettre en oeuvre la méthode selon l'une quelconque des revendications précédentes.

17. Programme d'ordinateur comprenant des instructions qui, lorsque ledit programme d'ordinateur est exécuté, le conduisent à mettre en oeuvre la méthode selon l'une quelconque des revendications 1 à 15.

18. Support lisible par un ordinateur sur lequel est enregistré le programme d'ordinateur selon la revendication précédente.

**Patentansprüche**

1. Verfahren zum Segmentieren eines Bildes, wobei das Verfahren per Computer umgesetzt wird und die folgenden Schritte umfasst:

(0) Auswählen von Pixeln des Bildes;
(i) Bewerten einer Krümmung in jedem der Pixel, wobei ein Wertebereich der Krümmung in eine endliche Anzahl von Werten diskretisiert wird, und wobei die Krümmung in dem diskretisierten Bereich bewertet wird;
(ii) Definieren eines topographischen Reliefs auf Basis des Bildes, wobei eine Höhe jedes der Pixel der in Schritt (i) bewerteten Krümmung entspricht;
(iii) Berechnen einer Wasserscheide des in Schritt (ii) definierten topographischen Reliefs, um daraus Einzugsgebiete abzugrenzen;
(iv) Definieren einer Partition der Pixel auf Basis der in Schritt (iii) berechneten Wasserscheide;
(v) Definieren einer Segmentierung des Bildes in ein oder mehrere Pixelgruppen auf Basis der in Schritt (iv) definierten Partition.

2. Segmentierungsverfahren nach dem vorstehenden Anspruch, **dadurch gekennzeichnet, dass** Schritt (0) darin besteht, alle Pixel des Bildes auszuwählen.

3. Segmentierungsverfahren nach einem der vorstehenden Ansprüche, **dadurch gekennzeichnet, dass** Schritt (i) umfasst:

- einen ersten Teilschritt des Bewertens der Krümmung in einem begrenzten realen Intervall, welches aus dem Bereich besteht; und
- einen zweiten Teilschritt des Diskretisierens des Intervalls in eine endliche Anzahl von Werten.

4. Segmentierungsverfahren nach dem vorstehenden Anspruch, **dadurch gekennzeichnet, dass** das Intervall entspricht, ein geschlossenes begrenztes Intervall ist, das [0,r] entspricht, wobei r > 0.

5. Segmentierungsverfahren nach einem der vorstehenden Ansprüche, **dadurch gekennzeichnet, dass** es sich bei dem Bild um ein 3D-Bild handelt.

6. Segmentierungsverfahren nach dem vorstehenden Anspruch, **dadurch gekennzeichnet, dass** das 3D-Bild mithilfe einer Flugzeitkamera erzeugt wird.

7. Verfahren nach einem der zwei vorstehenden Ansprüche, **dadurch gekennzeichnet, dass** Schritt (i) die folgenden Teilschritte umfasst:

(i.1) Definieren einer Sammlung von Nachbarpixeln für jedes Pixel, in dem die Krümmung bewertet werden soll;
(i.2) Berechnen einer Kovarianz-Matrix der Nachbarpixel;
(i.3) Berechnen der Eigenwerte der in Schritt (i.2) berechneten Kovarianz-Matrix;
(i.4) Bewerten der Krümmung auf Basis der in Schritt (i.3) berechneten Eigenwerte.

8. Verfahren nach dem vorstehenden Anspruch, **dadurch gekennzeichnet, dass** die Krümmung mit folgendem Wert zusammenfällt

$$\frac{\lambda_1}{\lambda_1 + \lambda_2 + \lambda_3},$$

wobei $\lambda_1 \leq \lambda_2 \leq \lambda_3$ die in Schritt (i.3) berechneten Eigenwerte, in aufsteigender Reihenfolge geordnet, bezeichnet.

9. Verfahren nach einem der zwei vorstehenden Ansprüche, **dadurch gekennzeichnet, dass** die in Schritt (i.1) definierte Sammlung von Nachbarpixeln das Pixel umfasst, in dem die Krümmung bewertet werden soll, und aus höchstens einundachtzig Pixeln besteht, die im Wesentlichen auf ein Quadrat mit einer Seitenlänge von neun Pixeln verteilt sind, welches auf dem Pixel, in dem die Krümmung bewertet werden soll, zentriert ist.

10. Verfahren nach dem vorstehenden Anspruch, **dadurch gekennzeichnet, dass** die in Schritt (i.1) definierte Sammlung von Nachbarpixeln aus neun Pixeln besteht, die im Wesentlichen gemäß einem Quadrat mit einer Seitenlänge von drei Pixeln verteilt sind, welches auf dem Pixel, in dem die Krümmung bewertet werden soll, zentriert ist.

11. Verfahren nach einem der Ansprüche 7 bis 10,

    **dadurch gekennzeichnet, dass** Schritt (i.3) ebenfalls ein Berechnen der Eigenvektoren der in Schritt (i.2) berechneten Kovarianz-Matrix umfasst,
und dadurch, dass Schritt (i) den folgenden Teilschritt umfasst:
(i.5) Ermitteln einer Ausrichtung des Pixels, in dem in Schritt (i.4) die Krümmung bewertet wird, auf Basis der in Schritt (i.3) berechneten Eigenvektoren.

12. Verfahren nach einem der Ansprüche 1 bis 11, **dadurch gekennzeichnet, dass** Schritt (iii) die folgenden Teilschritte umfasst:

    (iii.1) Ermitteln einer Teilmenge der Pixel, bei denen die in Schritt (i) bewertete Krümmung lokal minimal ist;
(iii.2) Simulieren einer Überschwemmung des topographischen Reliefs durch einen virtuellen Wasseranstieg ausgehend von jedem der Pixel aus der Teilmenge der Pixel;
(iii.3) Berechnen der Wasserscheide auf Basis der Simulation aus Schritt (iii.2).

13. Verfahren nach einem der Ansprüche 1 bis 11, **dadurch gekennzeichnet, dass** Schritt (iii) die folgenden Teilschritte umfasst:

    (iii.1')Simulieren einer Überschwemmung des topographischen Reliefs durch einen virtuellen Wasserabfluss ausgehend von jedem Pixel aus den Pixeln;
(iii.2') Berechnen der Wasserscheide auf Basis der Simulation aus Schritt (iii.1').

14. Verfahren nach einem der vorstehenden Ansprüche, **dadurch gekennzeichnet, dass** es einen Schritt der Vorbearbeitung des Bildes vor Schritt (0) umfasst, wobei der Schritt der Vorbearbeitung ein Filtern umfasst, um ein Rauschen des Bildes zu reduzieren.

15. Verfahren nach einem der vorstehenden Ansprüche, **dadurch gekennzeichnet, dass** es weiter einen Schritt der Nachbearbeitung an Pixelgruppen aus der in Schritt (v) definierten Segmentierung umfasst.

16. IT-System, das Mittel umfasst, um das Verfahren nach einem der vorstehenden Ansprüche umzusetzen.

17. Computerprogramm, das Anweisungen umfasst, die, wenn das Computerprogramm ausgeführt wird, dieses dazu bringen, das Verfahren nach einem der Ansprüche 1 bis 15 umzusetzen.

18. Von einem Computer lesbarer Träger, auf dem das Computerprogramm nach dem vorstehenden Anspruch aufgezeichnet ist.

**Claims**

1. Segmentation method of an image,
the method being computer-implemented and comprising the following steps:

    (0) selecting pixels of said image;
(i) evaluating a curvature at each of said pixels, a domain of values of the curvature being discretized into a finite number of values, and said curvature being evaluated in said discretized domain;
(ii) defining a topographic relief based on said image, an altitude of each of said pixels corresponding to said curvature evaluated in step (i);
(iii) calculating a watershed of said topographic relief defined in step (ii) to delimitate catchment basins;
(iv) defining a partition of said pixels based on said watershed calculated in step (iii);
(v) defining a segmentation of said image into one or more groups of pixels based on said partition defined in step (iv).

2. Segmentation method according to the preceding claim, **characterized in that** step (0) consists in selecting all the pixels of said image.

3. Segmentation method according to any of the preceding claims, **characterized in that** step (i) comprises:

    - a first sub-step of evaluating said curvature in a real bounded interval consisting of said domain; and
- a second sub-step of discretizing said interval into a finite number of values.

4. Segmentation method according to the preceding claim, **characterized in that** said interval corresponds to a closed bounded interval corresponding to [0,r] where r > 0.

5. Segmentation method according to any one of the preceding claims, **characterized in that** said image is a 3D image.

6. Segmentation method according to the preceding claim, **characterized in that** said 3D image is generated from a time-of-flight camera.

7. Method according to any one of the two preceding claims, **characterized in that** step (i) comprises the following sub-steps:

   (i.1) defining a collection of neighboring pixels for each pixel at which the curvature is to be evaluated;
   (i.2) calculating a covariance matrix of said neighboring pixels;
   (i.3) calculating eigenvalues of the covariance matrix calculated in step (i.2);
   (i.4) evaluating said curvature based on the eigenvalues calculated in step (i.3).

8. Method according to the preceding claim, **characterized in that** said curvature coincides with a value

$$\frac{\lambda_1}{\lambda_1 + \lambda_2 + \lambda_3},$$

$\lambda_1 \le \lambda_2 \le \lambda_3$ designating the eigenvalues calculated in step (i.3), ordered in increasing order.

9. Method according to any one of the two preceding claims, **characterized in that** said collection of neighboring pixels defined in step (i.1) comprises the pixel at which the curvature is to be evaluated, and consists of at most eighty-one pixels substantially distributed in a square with a side of nine pixels, centred on the pixel at which the curvature is to be evaluated.

10. Method according to the preceding claim, **characterized in that** said collection of neighboring pixels defined in step (i.1) consists of nine pixels substantially distributed in a square with a side of three pixels, centred at the pixel at which the curvature is to be evaluated.

11. Method according to any one of claims 7 to 10,

   **characterized in that** the step (i.3) also comprises a calculation of the eigenvectors of the covariance matrix calculated in step (i.2), and **in that** step (i) comprises the following sub-step:
   (i.5) determining an orientation of the pixel at which the curvature is evaluated in step (i.4) based on the eigenvectors calculated in step (i.3).

12. Method according to any one of claims 1 to 11, **characterized in that** step (iii) comprises the following sub-steps:

   (iii.1) determining a subset of said pixels for which the curvature evaluated in step (i) is locally minimal;
   (iii.2) simulating a flooding of said topographic relief by a virtual rise of water from each of the pixels of said subset of said pixels;
   (iii.3) calculating said watershed based on the simulation of step (iii.2).

13. Method according to any one of claims 1 to 11, **characterized in that** step (iii) comprises the following sub-steps:

   (iii.1') simulating a flooding of said topographic relief by a virtual water runoff from each of said pixels;
   (iii.2') calculating said watershed based on the simulation of step (iii.1').

14. Method according to any one of the preceding claims, **characterized in that** it comprises a step of pre-processing said image prior to step (0), the pre-processing step comprising a filtering to reduce a noise of said image.

15. Method according to any of the preceding claims, **characterized in that** it further comprises a post-processing step on groups of pixels of the segmentation defined in step (v).

16. A computer system comprising means for carrying out the method according to any one of the preceding claims.

17. A computer program comprising instructions which, when said computer program is executed, cause it to carry out the method according to any one of claims 1 to 15.

18. A computer-readable medium on which is stored the computer program of the preceding claim.

FIG. 1